# EUROPÄISCHE PATENTSCHRIFT

(11) **EP 1 110 144 B1**
(45) Veröffentlichungstag und Bekanntmachung des Hinweises auf die Patenterteilung: **23.10.2002**
(21) Anmeldenummer: 99952377.2
(22) Anmeldetag: 12.08.1999
(51) Int. Cl.: G06F 11/00

(54) **VORRICHTUNG UND VERFAHREN ZUR KOPPLUNG VON REDUNDANTEN ELEKTRONISCHEN SCHALTUNGEN ÜBER REDUNDANTE BUSSE OHNE FEHLERFORTPFLANZUNG**
DEVICE AND METHOD FOR COUPLING REDUNDANT ELECTRONIC CIRCUITS VIA REDUNDANT BUSES WITHOUT ERROR PROPAGATION
DISPOSITIF ET PROCEDE DE COUPLAGE DE CIRCUITS ELECTRONIQUES REDONDANTS PAR DES BUS REDONDANTS SANS PROPAGATION D'ERREUR

(30) Priorität: 09.09.1998 DE 19841183
(43) Veröffentlichungstag der Anmeldung: 27.06.2001
(73) Patentinhaber: Astrium GmbH, 81663 München (DE)
(72) Erfinder: PIRNER, Gerhard, D-81737 München (DE); MITTERMAIER, Johann, D-85655 Gro helfendorf (DE)
(74) Vertreter: Ulrich, Thomas
(86) Internationale Anmeldenummer: DE9902525
(87) Internationale Veröffentlichungsnummer: WO00014636

(56) Entgegenhaltungen:
- DE-A- 3 328 405
- DE-A- 3 338 341
- US-A- 4 015 246
- US-A- 5 146 563
- US-A- 5 511 224
- PATENT ABSTRACTS OF JAPAN vol. 14, no. 409 (P-1101), 5. September 1990 (1990-09-05) & JP 02 158817 A (FUJI ELECTRIC CO LTD), 19. Juni 1990 (1990-06-19)
- D.R. WITZEL: "A MILITARY AVIONICS 32-BIT ADVANCED MODULAR PROCESSOR SYSTEM" 9TH DIGITAL AVIONICS SYSTEMS CONFERENCE, 15. Oktober 1990 (1990-10-15), Seiten 462-467, XP000224599 Virginia, USA

## Beschreibung

Die Erfindung bezieht sich auf eine Vorrichtung und ein Verfahren zur Kopplung von redundanten elektronischen Schaltungen über Mehrfachbussysteme.

Damit ist es möglich, zwei Geräte in ein Gerät zu integrieren, wobei das entstandene Produkt nicht nur auf Geräteebene redundant ist, sondern die einzelnen Funktionsblöcke eines Gerätes sind von jedem Gerät ansprechbar, was die Verfügbarkeit des Gesamten erhöht verglichen mit zwei isolierten Geräten.

Die Redundanz - das Vorhandensein eines funktional identischen Gerätes - wird benötigt, um den Ausfall eines elektronischen Bauteils zu kompensieren, d. h. ein solcher Ausfall darf nur zum Verlust des betroffenen Gerätes führen, nicht aber auch zum Verlust des redundanten Gerätes. Dies ist besonders beim Einsatz in der Raumfahrt, ebenso aber auch bei sicherheitskritischen Anwendungen notwendig.

Es sind zwar bereits Mehrfachbussysteme wie auch Mehrrechnersysteme - redundante Rechnersysteme - bekannt, beispielsweise aus der DE 3338341 und der DE 3328405, jedoch ist dort eine Realisierung der Koppeleinheiten in Bezug auf Fehlertoleranz sowie Unterdrückung der Fehlerfortpflanzung nicht ersichtlich. So ist in der DE 3338341 die Verbindung der Koppler untereinander eine Quelle für einen Einzelfehler (auch single point failure genannt), der zu einem Totalausfall des Gesamtgeräts führen kann. Auch die einfache Entkopplung der Busse mit nur einem Treiberbaustein ist zur Verhinderung einer Fehlerfortpflanzung nicht ausreichend, d.h. ein Kurzschluß in einem Koppler bewirkt einen Betrieb des nächsten Kopplers außerhalb der Bauteilespezifikation.

In der Raumfahrt werden besonders CMOS-Logikfamilien wegen der geringen Leistungsaufnahme eingesetzt. Doch bei der CMOS-Technik ergibt sich das Problem der parasitären Dioden an den Ein- und Ausgängen. Bei einer ausgeschalteten Versorgungsspannung leiten diese Dioden außen anliegende Signale niederohmig ab, eine einfache Zusammenschaltung zu einem Bussystem ist nicht fehlerfortpflanzungsfrei.

Im US-Patent 5 117 129 ist eine Methode beschrieben, wie diese parasitären Dioden umgangen werden können. Dies erfordert aber eine Änderung der integrierten Schaltungen in der beschriebenen Weise. Diese integrierten Schaltungen sind jedoch nur von einem Hersteller beziehbar (somit ist keine zweite Beschaffungsquelle vorhanden) und aufgrund der speziellen Entwicklung ergibt sich ein hoher Preis und eine schlechte Verfügbarkeit. Auch wird in der US 5 117 129 auf eine mögliche Fehlerfortpflanzung bei Defekt der Koppelschaltung selbst nicht eingegangen.

Daher ist es Aufgabe der vorliegenden Erfindung, eine Vorrichtung und ein Verfahren zur Kopplung von redundanten elektronischen Schaltungen über Mehrfachbussysteme auszubilden, bei dem bei Ausfall eines einzigen Bauteils die Funktionalität des Gesamtgeräts garantiert erhalten bleibt und kein Folgefehler entsteht.

Erfindungsgemäß wird diese Aufgabe durch die im Patentanspruch 1 bzw. 10 angegebenen Merkmale gelöst. Weitere vorteilhafte Ausgestaltungen und Weiterbildungen der Erfindung werden in den Unteransprüchen angegeben.

Weitere Aufgaben, Merkmale und Vorteile der vorliegenden Erfindung werden aus der nachfolgenden Beschreibung eines bevorzugten Ausführungsbeispiels in Verbindung mit der Zeichnung offensichtlich.

Es zeigen:
Fig. 1 eine Gesamtkonfiguration des redundanten Rechners,
Fig. 2 den grundsätzlichen Aufbau von Master-Modulen,
Fig. 3 den grundsätzlichen Aufbau von Local Bussen für Slave-Module,
Fig. 4 den Aufbau eines Kopplers für den Bus-Master,
Fig.en 5 und 6 den Aufbau des Kopplers für ein heiß bzw. kalt redundantes Modul und
Fig.en 7 und 8 einen Buszyklus (Inter Module Bus Cycle).

Die vorliegende Erfindung berücksichtigt alle relevanten Raumfahrtanforderungen zum Betrieb eines redundanten Rechnersystems. Die wichtigste Aufgabe ist die Abdeckung von Einzelfehlern, die in keinem Fall zu einer Fehlerfortpflanzung führen dürfen. Die Erfindung deckt aber auch Mehrfachfehler ab, sofern sie unterschiedlichen Typs sind.

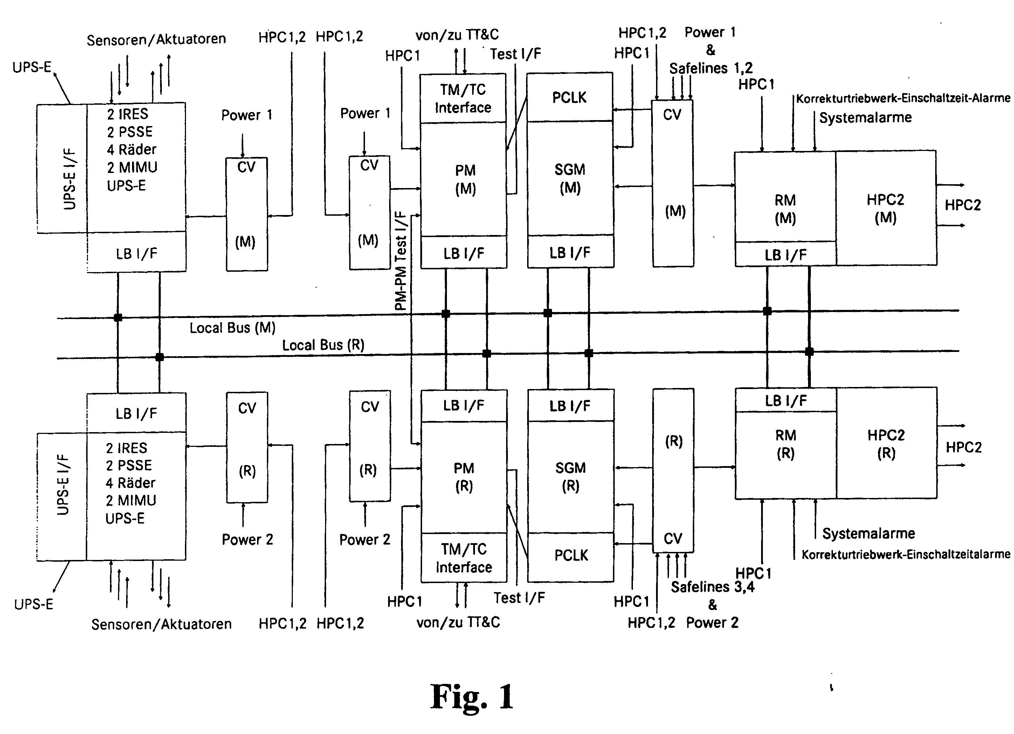

In Fig. 1 ist die Gesamtkonfiguration des redundanten Rechners dargestellt. Der Rechner beinhaltet jede elektrische Schaltungsfunktion (kurz Modul genannt) doppelt wie auch das Bussystem, genannt Local Bus, wobei man von einem Haupt- bzw. Main(M)-Zweig (alle Main(M)-Module und Local-Bus-Main) und einem Redundant(R)-Zweig (alle Redundant(R)-Module und Local-Bus-Redundant) spricht. Über die Busse können alle Module kommunizieren, also das Prozessor-Modul-Main mit z.B. Reconfiguration-Modul-Redundant, wobei der Transfer sowohl über den Local-Bus-Main als auch über den Local-Bus-Redundant abgewickelt werden kann. Somit erzielt man eine weit höhere Verfügbarkeit als mit einem redundanten Rechnersystem bestehend aus zwei einzelnen Rechnern.

Bei Einzelrechnern führt ein Einzelfehler bereits zu einem Ausfall des betroffenen Rechners. In der hier beschriebenen erfindungsgemäßen Konfiguration führt ein Fehler eines Moduls zu dessen Nichtverwendbarkeit, die anderen Module des Zweigs bleiben verfügbar, was zu einer höheren Gesamtzuverlässigkeit führt (die Zuverlässigkeit eines Systems steigt je mehr Funktionen parallel verfügbar sind).

Die einzelnen Module sind je nach Typ heiß-redundant, d.h. die Versorgungsspannung ist immer anliegend, oder kalt-redundant, d.h. nur ein Modul des selben Typs ist aktiv. Heiß-redundante Module sind die beiden SGM-Speichermodule, in die die aktuellen Systemdaten redundant abgelegt werden können, damit diese Daten auch sicher zur Verfügung stehen. Beim Rücklesen der Daten werden diese auf ihre Plausibilität geprüft und, wenn nötig, die redundanten Datensätze verwendet. Bei den kalt-redundanten Modulen wird im Fehlerfall das zuvor aktive Modul ausgeschaltet und das andere typgleiche Modul eingeschaltet. Zur Vermeidung einer Fehlerfortpflanzung besitzt jedes Modul bzw. beim Neubildungs-Modul/Sicherungs-Speicher-Modul (Reconfiguration-Modul/Safeguard-Memory-Modul=RM/SGM) jede Modulgruppe eine eigene Stromversorgung. Diese Versorgungen sind mit Strombegrenzungen ausgestattet, ein Fehler wie z.B. Kurzschluß der Ausgangsspannung wirkt sich elektrisch und thermisch nicht negativ auf die anderen Module aus.

Ein Fehler in einem Stromversorgungseingang wird durch Verwendung von zwei Versorgungszweigen POWER1 (für den Main-Zweig) und POWER2 (für den Redundant-Zweig) abgedeckt. Die Sicherungs-Speicher-Module SGM sind zur Datenerhaltung zusätzlich mit den separaten Versorgungszweigen SAFELINE1 bis SAFELINE4 abgesichert.

In dem in Fig. 1 beschriebenen Rechner sind die Prozessor-Module (PM) die Master-Einheiten zur Steuerung der Local-Busse, alle anderen Module sind Slave-Einheiten. Der Zugriff sowie die gesamte zeitliche Steuerung wird von dem jeweils aktiven Prozessor-Modul PM durchgeführt. Die Local-Bus-Koppler eines Zweiges (Main bzw. Redundant) aller Module sind ebenfalls mit eigenen Stromversorgungen verbunden, die jedoch mit der Stromversorgung des Prozessor-Modules PM ein- und ausgeschaltet werden. Diese Nutzung eines gemeinsamen Primärteils ist nicht zwingend notwendig, führt aber zu einer Verringerung des Aufwandes verglichen mit einer komplett eigenständigen Stromversorgung.

Die Gesamtkonfiguration des Rechners umfaßt zusätzlich zu den vorstehend beschriebenen Modulen Umwandler-Module Converter(CV)-Module), Local Bus Interfaces (LB I/F) bzw. Local Bus Schnittstellen, Telemetrie/Fernbefehl TT&C (TM/TC)-Interfaces bzw. -Schnittstellen. Aktuatoren liefern Eingangssignale für den Rechner von Infrarot-Erd-Sensoren (IRES), Präzisions-Sonnensensor-Elektronik (PSSE), Rädern sowie Miniatur-Intertial-Meßeinrichtungen (MIMU) und vereinheitlichter Antriebs-System-Elektronik (UPS-E). Den Umwandler-Modulen (CV-Modulen), die mit den SAFELINES 1, 2 bzw. 3,4 und/oder dem Versorgungszweig POWER1 bzw. POWER2 verbunden sind, werden Befehle hoher Priorität HPC1 bzw. HPC2 zugeführt. Dem Neubildungs(RM)-Modul werden Systemalarme sowie Korrekturtriebwerk-Einschaltzeit-Alarme ("Thruster on-time alarms") zugeführt.

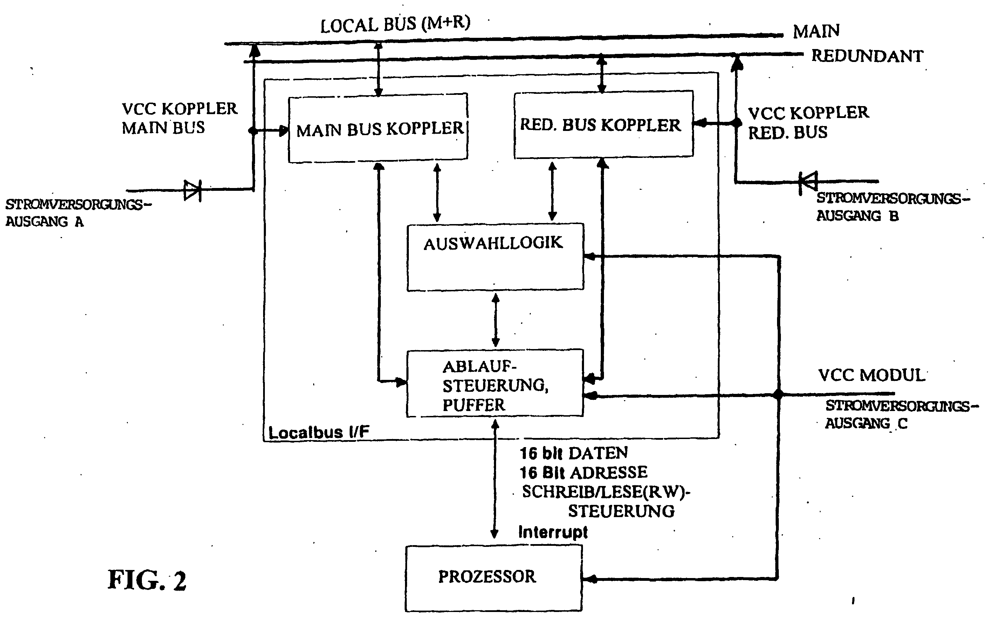

Fig. 2 beschreibt den grundsätzlichen Aufbau für die Master-Module. Die beiden Local-Busse werden mit den separaten Stromversorgungen Ausgang A bzw. Ausgang B des momentan aktiven Prozessor-Modules gespeist (wird von Ausgang C versorgt), wobei über die Dioden eine Rückversorgung der Stromversorgungen ausgeschlossen ist. Die Stromversorgungen A und B sind selbst tolerant gegenüber Rückversorgung, die Dioden verhindern eine Fehlerfortpflanzung bei einem Kurzschluß in der Stromversorgung A oder B. Die beiden Koppler werden über die Auswahllogik gewählt, der aktive Koppler führt die Bussequenzen durch, die vom Prozessor und der Ablaufsteuerung vorgegeben werden.

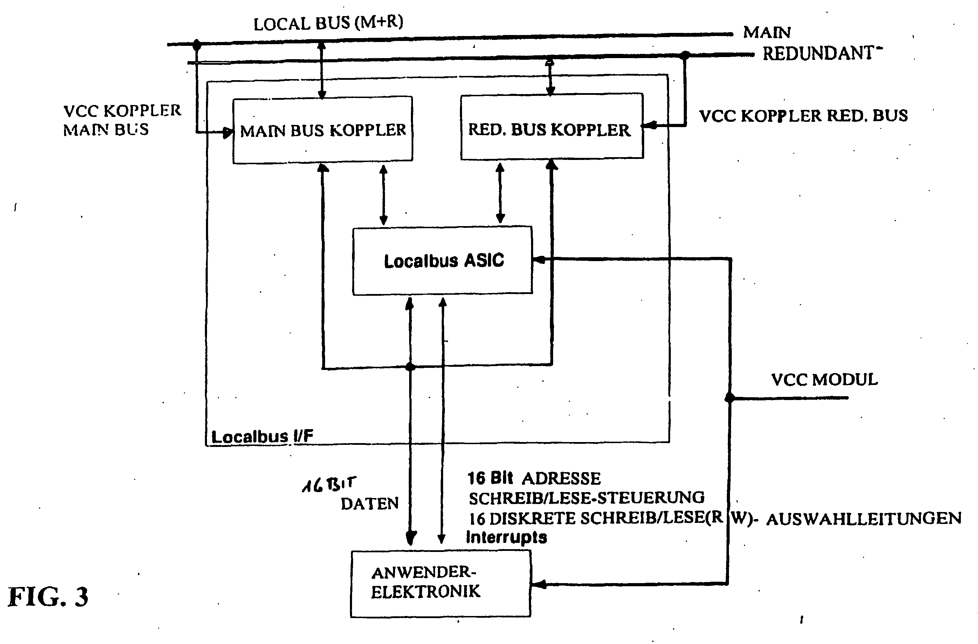

In Fig. 3 ist der grundsätzliche Aufbau der Local-Busse für die Slave-Module beschrieben. Die beiden Busse sind auch hier unabhängig voneinander. Jeder Bus ist mit einem Buskoppler ausgestattet, dessen Eigenschaft es ist, die komplette elektrische Trennung zwischen den Bussen und den Modulen durchzuführen. Dies wird durch separate Stromversorgungen sowohl für die Local-Busse als auch für die einzelnen Module sowie eine Entkopplung der Signalleitungen vom Modul zu den Bussen erreicht.

In den Fig.en 4 bis 6 sind Schaltungen im Detail dargestellt. Es ist die Anbindung des Masters (Prozessor-Modul PM)) sowie eines heiß redundanten Modules (Sicherungs-Spelcher-Modul SGM ) und eines kalt redundanten Moduls (Neubildungs-Modul RM) stellvertretend dargestellt.

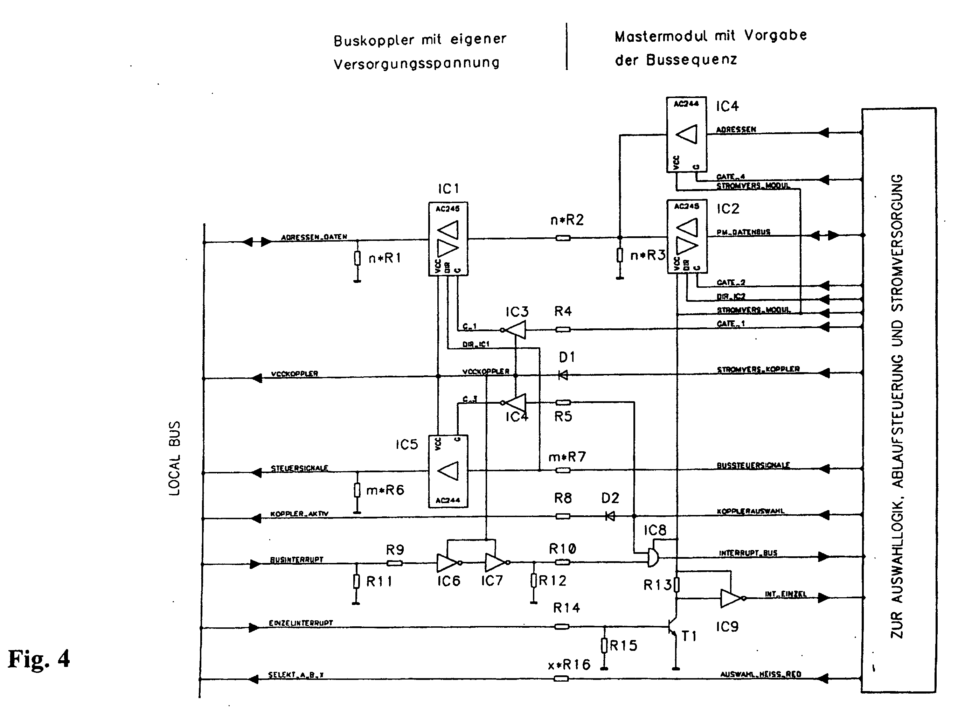

Fig. 4 zeigt den Aufbau eines Kopplers für den Bus-Master. Der Bus-Master kann jedoch mehrere Buskoppler bedienen. Die elektrische Trennung des Moduls zu einem Bus wird für die Signale mit Serienwiderständen erreicht. Diese Serienwiderstände sind so dimensioniert, daß sie einerseits entsprechend niederohmig für dynamische Bussignale sind, andererseits den Treiber im Fehlerfall innerhalb seiner spezifizierten Werte halten und damit eine Fehlerfortpflanzung verhindert wird. Die Trennlinie der verschiedenen Versorgungsspannungen befindet sich bei R2, R4, D1, R5, R7, R8, R12. An dieser Linie wird eine Fehlerfortpflanzung verhindert. Wenn kein Buszugriff erfolgt, befinden sich die Steuersignale für die Buskoppler auf niedrigem Pegel. Für den Buskoppler ist es kein Unterschied, ob ein Modul inaktiv oder ausgeschaltet ist. Über die Inverter IC3 und IC4 wird der Local-Bus für das aktive Prozessor-Modul PM angesteuert bzw. für das andere Prozessor-Modul PM bei niedrigem Pegel freigegeben (die G-Signale sperren bei hohem Pegel die Bausteine IC1 und IC5). Entsprechend dem Status des Signals KOPPLERAUSWAHL hat entweder das Prozessor-Modul(PM)-Main oder -Redundant mit den Leitungen bezeichnet als Steuersignale mit Anzahl m die Buskontrolle, wobei beide Prozessor-Module PM nicht gleichzeitig Buszugriff haben. Dies wird durch das Prozessor-Modul-interne Signal Testmode bei gleichzeitigem Betrieb zweier Prozessor-Module PM verhindert (ein Prozessor-Modul PM in normaler Funktion, das zweite Prozessor-Modul PM im Testmode). Über das Signal GATE_1 steuert das aktive Prozessor-Modul PM den n Bit breiten ADRESSEN_DATEN-Bus zu dem Local-Bus. Die doppelte Trennung des Prozesor-Modul(PM)-Datenbusses mit IC2 ist notwendig, um im Fall des Kurzschlusses eines Buskopplers auf dem Prozessor-Modul(PM)-Datenbus noch den vollen Spannungshub zu haben. Bei einer direkten Verbindung der Buskoppler hinter R2 ergäbe sich nur mehr der halbe Spannungshub beim Lesen der Daten. Über D1 wird eine Rückspeisung der Versorgungsspannungen verhindert. Der Baustein IC4 ermöglicht die zeitlich versetzte Übertragung (Multiplexbetrieb) des ADRESSEN_DATEN-Busses. Die Bausteine IC6 bis IC9, R9 bis R15 und T1 dienen der Interruptbearbeitung. Über die Stichleitungen SELEKT_A_B_X werden die heiß-redundanten Module adressiert, die Entkopplung erfolgt hier über die Serienwiderstände x*R16, wobei x die Zahl der heiß-redundanten Module ist.

Die Fig.en 5 und 6 zeigen den Aufbau des Kopplers für ein heiß- bzw. kalt-redundantes Modul. Auch hier ist die Anbindung nur eines Kopplers gezeigt.

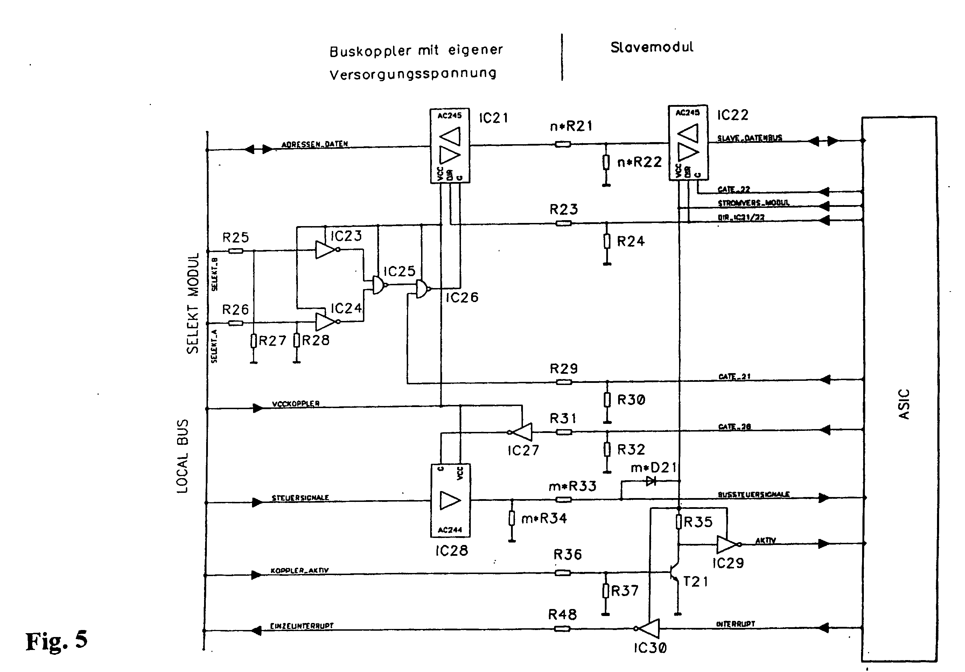

Die Details der Anbindung eines heiß-redundanten Moduls sind in Fig. 5 dargestellt. Die Erkennung des aktiven Busses erfolgt mit dem Signal KOPPLER_AKTIV. Dieses Signal ist mittels der Transistoren T21 sowie den Widerständen R35 bis R37 entkoppelt, was eine Stromeinspeisung in ein abgeschaltetes Modul verhindert. Für ein Slave-Modul wiederum ist eine Rückspeisung in einen nicht aktiven (oder defekten) Buskoppler nicht möglich, da sich alle Signale vom Slave-Modul zu dem nichtbenützten Buskoppler in der Trennlinie n*R21, R23, R29 und R31 auf niedrigem Pegel befinden (logical low). Die Widerstände n*R22, R24, R30, R32, m*R34 und R37 bewirken einen definierten Pegel auf den entsprechenden Leitungen im Falle, daß das Signal nicht aktiv ist (bei undefinierten Eingangspegeln von CMOS Bauteilen ergibt sich eine unzulässig hohe Stromaufnahme). Nach der Erkennung des aktiven Local Busses steuert das ASIC die entsprechenden GATE_- und DIR_-Signale unter Benutzung der vom aktiven Prozessor-Modul PM generierten Bussequenz an. Diese Bussequenz wird über die STEUERSIGNALE mittels IC28 dem Slave-Modul mitgeteilt. Das IC27 verhindert hier eine Einspeisung in das Slave-Modul, wenn dies z.B. bei Fehler abgeschaltet wurde.

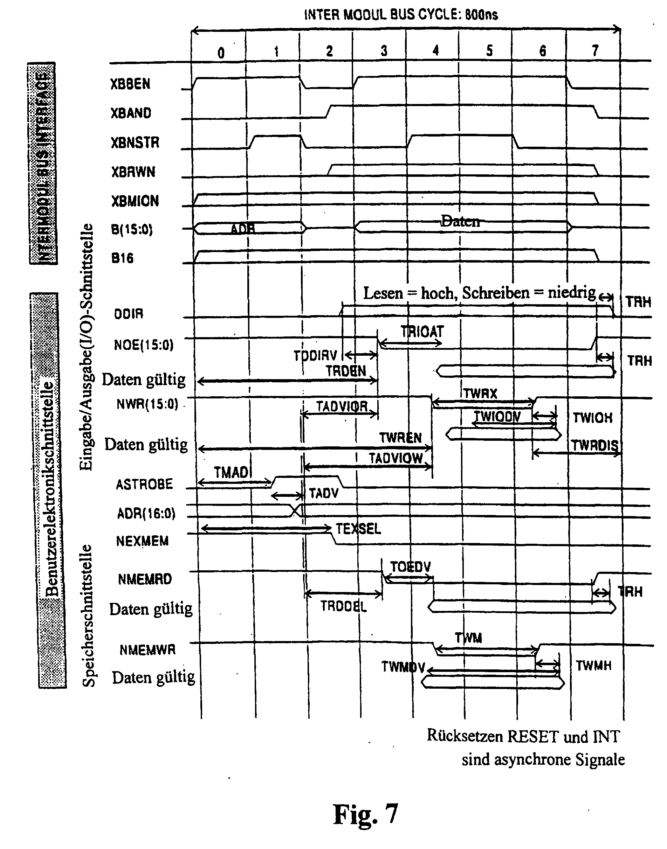

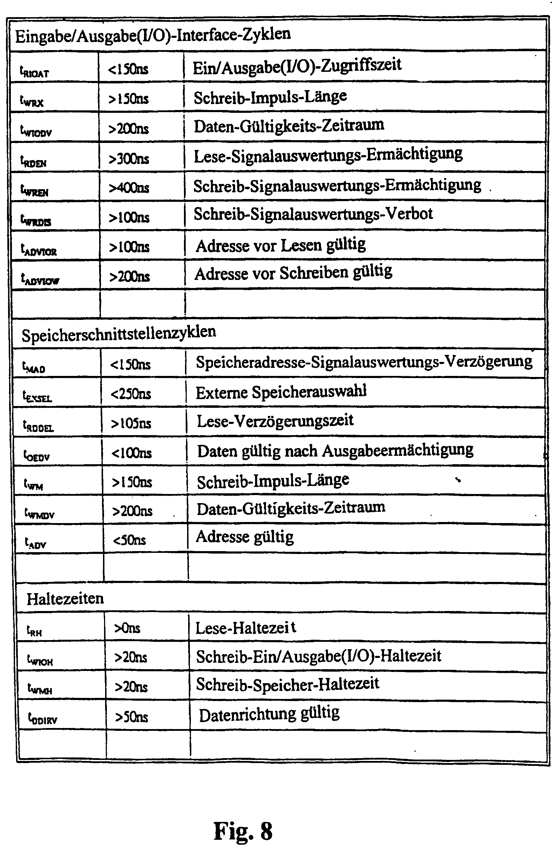

Die Übertragung der Adressen und Daten erfolgt zur Einsparung von Leitungen hintereinander. Die Modulauswahl für den Datentransfer erfolgt über den aktiven Bus mittels einer Adressierungsphase. In dieser Phase werden die Informationen über IC21 und IC22 zum ASIC geleitet. Die Moduladresse wird durch eine Logikschaltung im ASIC erkannt und in der darauffolgenden Datenphase werden IC21 bzw. IC22 entsprechend geschaltet. In Fig. 7 und Fig. 8 ist ein solcher Buszyklus (genannt Inter-Module-Bus-Cycle) im Detail dargestellt.

Zur einfachen Anpassung an ein Prozessorsystem wurde die Breite des ADRESS_DATEN-Busses mit 16 Leitungen gewählt. In der Adressierungsphase ist ein definierter Bereich dieser Leitungen für die Moduladresse reserviert, wobei diese Adresse im Gesamtsystem nur einmal vorkommt, d.h. im Main-Zweig und im Redundant-Zweig gibt es keine gleichen Adressen. Mit dieser Auslegung ist es möglich, auch bei den kalt-redundanten Modulen beide anzuschalten. Damit ergibt sich die Fähigkeit, auch Fehler auf beiden der redundanten Module abzufangen, sofern nicht die identische Funktion der Module von den Fehlern betroffen ist.

Die heiß-redundanten Module benötigen einen Mechanismus zum Deaktivieren des Buskopplers. Ansonsten ist es möglich, daß im Fehlerfall ein solches Modul alle an ihm hängenden Buskoppler aktiv auf Schreiben auf den Local-Bus schaltet und somit alle Local-Busse blockiert sind. Dies wird durch die Schaltung mit R25 bis R28 sowie von IC23 bis IC26 erreicht. Wenn keine vom aktiven Prozessor-Modul (PM) kommende Stichleitung SELEKT_A bzw. SELEKT_B auf logisch High-Pegel geschaltet ist, wird jede Einwirkung vom Slave-Modul zu einem Local-Bus unterbunden.

Die Dioden m*D21 verhindern beim möglichen Ausschalten des Slave-Moduls eine unzulässig hohe Spannung an den Eingängen des ASIC gegenüber der Versorgungsspannung.

Interrupts von heiß-redundanten Modulen werden als EINZELINTERRUPT zu den Prozessor-Modulen PM geführt. Dies erlaubt eine eindeutige und fehlerfortpflanzungsfreie Identifikation der Interruptquelle.

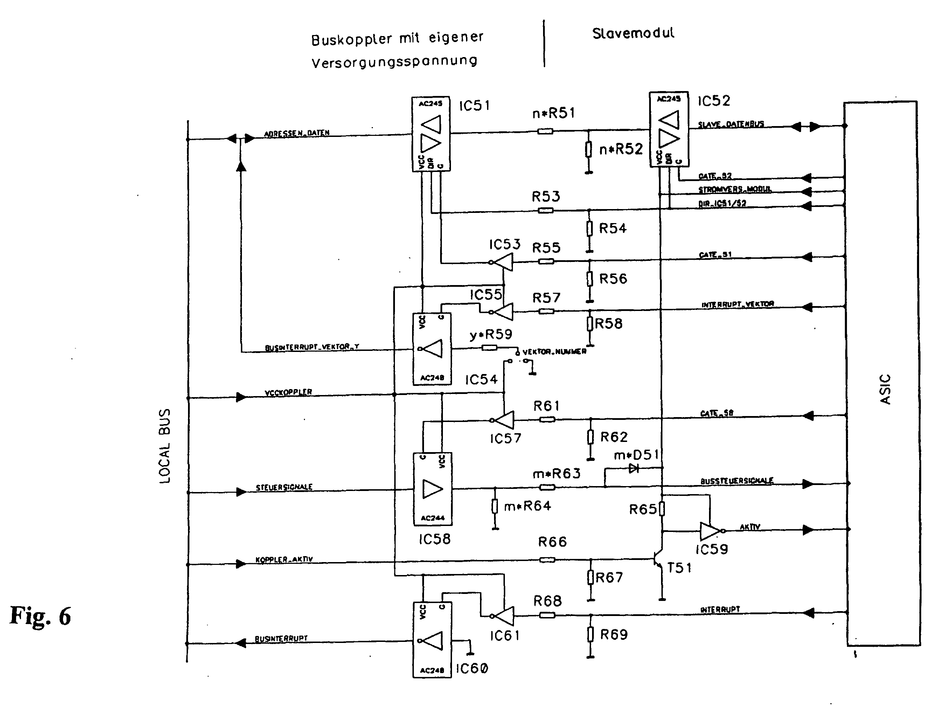

Die Anbindung eines kalt-redundanten Moduls ist in Fig. 6 dargestellt. Im Vergleich zu Fig. 5 eines heiß-redundanten Moduls ergeben sich zwei wesentliche Unterschiede. Dies ist die fehlende Auswahl der Module mit SELEKT-Leitungen sowie eine andere Interruptverarbeitung.

Die Steuerung des ADRESSEN_DATEN-Busses erfolgt über GATE_51 und IC53. Hier ist der Baustein IC53 nicht aktiv, wenn das Modul abgeschaltet ist. Die Steuerung des aktiven Local-Busses erfolgt wie in Fig. 5 durch das ASIC mit der durch das aktive PM-Modul vorgegebenen Sequenz.

Bei den kalt-redundanten Modulen gibt es einen BUSINTERRUPT. Dieser wird durch das ASIC generiert. Die Schaltung mit R68, R69, IC60 und IC61 sorgt hier für die notwendige Entkopplung. Damit verschiedene Interruptquellen erkannt werden können, wird vom ASIC aus bei der entsprechenden Bussequenz ein INTERRUPT_VECTOR_Y auf den ADRESSEN_DATEN-Bus gelegt, der bei einem Interrupt über den Bus ebenfalls eine eindeutige Identifikation der Quelle erlaubt. Hierzu können die kalt-redundanten Slave-Module verschiedene ADRESSEN_DATEN-Leitungen verwenden, sowie eine unterschiedliche VEKTOR NUMMER ist selektierbar über y*R59.

## Patentansprüche

1. Rechnersystem mit redundanten elektronischen Schaltungen, mit: jeweils einem Local-Bus für einen Main- (M) und einen Redundant- (R) Zweig und Main-Modulen (I/F(M), PM(M), SGM(M), RM(M), HPC2(M)) und deren Stromversorgungen (CV(M)) sowie entsprechenden Redundant-Modulen (I/F(R), PM(R), SGM(R), RM(R), HPC2(R)) und deren Stromversorgungen (CV(R)) für die jeweiligen redundanten elektronischen Schaltungen, wobei je ein Modul und/oder je eine Neubildungs/Sicherungs-Speicher-Modulgruppe (RM/SGM) und die Local-Busse eine eigene Stromversorgung (CV-Module) aufweisen, wobei alle Module der redundanten elektronischen Schaltungen über Buskoppler mit beiden Bussen verbunden sind und über die Busse untereinander kommunizieren können, bei einem Ausfall eines Moduls das jeweilige redundante Modul seine Funktion übernimmt, die anderen, nicht ausgefallenen Module des Zweigs eingeschaltet bleiben und Signalleitungen von den Modulen zu den Bussen durch Buskoppler mit Hilfe von Serienwiderständen und Treibern derart gekoppelt sind, dass eine elektrische Trennung der verschiedenen Module im Fehlerfall erreicht wird.

2. Vorrichtung nach Anspruch 1, wobei bei einem Master-Modul die beiden Local-Busse für den Main- und den Redundant-Zweig mit separaten Stromversorgungen (A, B) des momentan aktiven Prozessor-Modules (PM) gespeist werden, wobei über Dioden eine Rückversorgung der Stromversorgungen ausgeschlossen ist.

3. Vorrichtung nach einem der Ansprüche 1 oder 2, wobei das jeweilige aktive Bussystem mittels eines entkoppelten Busauswahlsignals (KOPPLER_AKTIV) erkannt wird.

4. Vorrichtung nach Anspruch 3, wobei die Entkopplung des Busauswahlsignals (KOPPLER_AKTIV) mittels eines Transistors (T21; T51) sowie Widerständen (R35 bis R37; R65 bis R67) erfolgt.

5. Vorrichtung nach einem der Ansprüche 1 bis 4, wobei bei Ausfall der Busauswahlsignale (SELEKT_A, SELEKT_B) jede Einwirkung vom Slave-Modul zu einem Local-Bus unterbunden ist.

6. Vorrichtung nach einem der Ansprüche 1 bis 5, wobei die Module heiß-redundant sein können, wobei die Versorgungsspannung immer anliegt, oder kalt-redundant sein können, wobei nur ein Modul desselben Typs aktiv ist.

7. Vorrichtung nach Anspruch 4, wobei heiß-redundante Module Sicherungs-Speicher-Module (SGM) sind, in die die aktuellen Systemdaten redundant abgelegt werden können.

8. Vorrichtung nach Anspruch 4, wobei bei den kalt-redundanten Modulen im Fehlerfall das zuvor aktive Modul ausgeschaltet und das andere typgleiche Modul eingeschaltet wird.

9. Vorrichtung nach einem der Ansprüche 1 bis 4, wobei bei kalt-redundanten Modulen beide redundanten Module eingeschaltet werden können, um Fehler auf beiden redundanten Modulen abzufangen, solange nicht die identische Funktion fehlerhaft ist.

10. Verfahren zur Kopplung von redundanten elektronischen Schaltungen eines Rechnersystems mit einen Main-(M) und einem Redundant-(R) Zweig und Main-Modulen sowie entsprechenden Redundant-Modulen, mit den Schritten:
Verbinden aller Module der redundanten elektronischen Schaltungen über Buskoppler mit einem Local-Bus Main (M) sowie einem Local-Bus Redundant (R), so dass alle Module über beide Busse untereinander kommunizieren können. Versorgen jeweils eines Moduls und/oder jeweils einer Neubildungs/Sicherungs-Speicher-Modulgruppe (RM/SGM) und der Local-Busse über eine eigene Stromversorgung (CV-Module), Koppeln der Signalleitungen von den Modulen zu den Bussen mit Hilfe von Serienwiderständen und Treibern derart, dass eine elektrische Trennung der verschiedenen Module im Fehlerfall erreicht wird und Erkennen einer Fehifunktion eines Moduls und Übernehmen der Funktion dieses Moduls durch das jeweilige redundante Modul, wobei die anderen nicht ausgefallenen Module des Zweigs eingeschaltet bleiben.

11. Verfahren nach Anspruch 10, mit dem weiteren Schritt Ausschließen einer Rückspeisung der Versorgungsspannungen (A, B) des Local-Bus Main (M) bzw. redundant (R) bei einem Kurzschluss in den Stromversorgungen des Local-Bus Main (M) bzw. redundant (R).

12. Verfahren nach einem der Ansprüche 10 oder 11, mit dem weiteren Schritt Erkennen des jeweiligen aktiven Bussystems mittels eines entkoppelten Busauswahlsignals (KOPPLER_AKTIV).

13. Verfahren nach einem der Ansprüche 10 bis 12, mit dem weiteren Schritt automatisches Rückfallen bei Ausfall der Busauswahlsignale (SELELKT_A, SELEKT_B), wobei in diesem Fall alle Main-Module sich auf den Local-Bus Main (M) und alle redundanten Module sich auf den Local-Bus redundant (R) aufschalten.

## Claims

1. Computer system having redundant electronic circuits, the system having a local bus for a main branch (M) and a local bus for a redundant branch (R), and main modules (I/F(M), PM(M), SGM(M), RM(M), HPC2(M)) and their power supplies (CV(M)), and corresponding redundant modules (I/F(R), PM(R), SGM(R), RM(R), HPC2(R)) and their power supplies (CV(R)) for the respective redundant electronic circuits, wherein each module and/or each re-configuration/safeguard-memory module group (RM/SGM) and the local buses have their own power supply (CV modules), wherein all modules of the redundant electronic circuits are connected via bus couplers with both buses and are able to communicate with one another via the buses, in the event of failure of one module the respective redundant module assumes its function, the other, intact, modules of the branch remain switched on and signal lines from the modules to the buses are coupled by bus couplers by means of series resistors and drivers in such a way that electrical isolation of the different modules is achieved upon occurrence of fault.

2. Device according to claim 1, wherein in the case of a master module the two local buses for the main and the redundant branch are fed by separate power supplies (A, B) of the instantaneously active processor module (PM), a reverse supply of the power supplies being excluded by means of diodes.

3. Device according to claim 1 or 2, wherein the particular active bus system is recognised by means of a de-coupled bus selection signal (COUPLER_ACTIVE).

4. Device according to claim 3, wherein decoupling of the bus selection signal (COUPLER_ ACTIVE) is effected by means of a transistor (T21; T51) and resistors (R35 to R37; R65 to R67).

5. Device according to any one of claims 1 to 4, wherein on failure of the bus selection signals (SELECT_A, SELECT_B) each action from slave module to a local bus is prevented.

6. Device according to any one of claims 1 to 5, wherein the modules can be hot-redundant, in which case the supply voltage is applied constantly, or cold-redundant, in which case only one module of the same type is active.

7. Device according to claim 4, wherein hot-redundant modules are safeguard-memory modules (SGM) in which the actual system data can be redundantly filed.

8. Device according to claim 4, wherein in the case of cold-redundant modules upon the occurrence of fault the previously active module is switched off and the other module of the same type is switched on.

9. Device according to any one of claims 1 to 4, wherein in the case of cold-redundant modules both redundant modules can be switched on in order to intercept faults on both redundant modules as long as the identical function is not defective.

10. Method for coupling redundant electronic circuits of a computer system having a main (M) and a redundant (R) branch and main modules and corresponding redundant modules, comprising the steps:
connection of all modules of the redundant electronic circuits via bus couplers to a local bus main (M) and to a local bus redundant (R), so that all modules are able to communicate with one another via both buses,
supply in each case of a module and/or in each case of a re-configuration/ safeguard memory module group (RM/SGM) and the local buses via a separate power supply (CV modules),
coupling of the signal lines from the modules to the buses by means of series resistors and drivers in such a way that electrical isolation of the different modules is achieved upon occurrence of fault and
recognition of a malfunction of a module and acceptance of the function of that module by the respective redundant module, the other, intact, modules of the branch remaining switched on.

11. Device according to claim 10, with the further step of exclusion of a reverse supply of the supply voltages (A, B) of the local bus main (M) and the local bus redundant (R) on a short-circuit in the power supplies of the local bus main (M) and local bus redundant (R) respectively.

12. Device according to claim 10 or 11, with the further step of recognition of the particular active bus system by means of a de-coupled bus selection signal (COUPLER_ACTIVE).

13. Device according to any one of claims 10 to 12, with the further step of automatic reversion on failure of the bus selection signals (SELECT_A, SELECT_B), wherein in that case all main modules connect to the local bus main (M) and all redundant modules connect to the local bus redundant (R).

## Revendications

1. Système calculateur avec des circuits électroniques redondants, comportant : un bus local respectif pour une branche principale (M) et pour une branche redondante (R) et des modules principaux (I/F(M), PM(M), SGM(M), RM(M), HPC2(M)) et leurs alimentations électriques (CV(M)), ainsi que des modules redondants correspondants (I/F(R), PM(R), SGM(R), RM(R), HPC2(R)) et leurs alimentations électriques (CV(R)) pour les circuits électroniques redondants respectifs, dans lequel un module respectif et/ou un groupe de modules de mémoire de reconfiguration/sécurité (RM/SGM) respectif et les bus locaux comprennent une propre alimentation électrique (modules CV), tous les modules des circuits électroniques redondants étant connectés aux deux bus via des coupleurs de bus et pouvant communiquer les uns avec les autres via les bus, dans lequel, lors d'une défaillance d'un module, le module redondant respectif reprend sa fonction, et les autres modules non défaillants de la branche restent en circuit et les lignes à signaux entre les modules et les bus sont couplées par des coupleurs de bus à l'aide de résistances série et de circuits de commande, de manière à obtenir une séparation électrique des différents modules en cas de défaillance.

2. Dispositif selon la revendication 1, dans lequel, pour un module maître, les deux bus locaux pour la branche principale et pour la branche redondante sont alimentés avec des alimentations électriques séparées (A, B) du module processeur momentanément actif (PM), un retour vers les alimentations électriques étant exclu au moyen de diodes.

3. Dispositif selon l'une ou l'autre des revendications 1 et 2, dans lequel le système de bus actif respectif est reconnu au moyen d'un signal découplé de sélection de bus (COUPLEUR_ACTIF).

4. Dispositif selon la revendication 3, dans lequel le découplage du signal de sélection de bus (COUPLEUR_ACTIF) s'effectue au moyen d'un transistor (T21 ; T51) ainsi que de résistances (R35 à R37 ; R65 à T67).

5. Dispositif selon l'une des revendications 1 à 4, dans lequel, en cas de défaillance des signaux de sélection de bus (SELECT_A, SELECT_B), toute influence du module esclave vers un bus local est interdite.

6. Dispositif selon l'une des revendications 1 à 5, dans lequel les modules peuvent être redondants à chaud, auquel cas une tension d'alimentation s'applique en permanence, ou bien être redondants à froid, auquel cas un seul module du même type est actif.

7. Dispositif selon la revendication 4, dans lequel des modules redondants à chaud sont des modules de mémoire de sécurité (SGM), dans lesquels les données de système actuelles peuvent être mémorisées de façon redondante.

8. Dispositif selon la revendication 4, dans lequel, dans les modules redondants à froid en cas d'erreur, le module actif est mis hors circuit et l'autre module de même type est mis en circuit.

9. Dispositif selon l'une des revendications 1 à 4, dans lequel, dans des modules redondants à froid, les deux modules redondants peuvent être mis en circuit afin de bloquer des erreurs sur les deux modules redondants, tant que ce n'est pas la fonction identique qui est défectueuse.

10. Procédé pour le couplage de circuits électroniques redondants d'un système calculateur, comportant une branche principale (M) et une branche redondante (R) et des modules principaux ainsi que des modules redondants correspondants, comprenant les étapes :
de connecter tous les modules des circuits électroniques redondants via des coupleurs de bus à un bus local principal (M), ainsi qu'à un bus local redondant (R), de sorte que tous les modules peuvent communiquer entre eux via les deux bus,
d'alimenter un module respectif et/ou un groupe de modules de mémoire de reconfiguration/sécurité (RM/SGM) respectif et les bus locaux via une propre alimentation électrique (modules CV),
de coupler les lignes à signaux entre les modules et les bus à l'aide de résistances série et de circuits de commande, de manière à obtenir une séparation électrique des différents modules en cas d'erreur, et
de reconnaître une fonction erronée d'un module et de reprendre par la fonction de ce module le module redondant respectif, les autres modules non défaillants de la branche restant en circuit.

11. Procédé selon la revendication 10, comprenant en outre l'étape :
d'exclure un retour des tensions d'alimentation (A, B) du bus local principal (M) ou du bus local redondant (R) lors d'un court-circuit dans les alimentations électriques du bus local principal (M) ou du bus local redondant (R) .

12. Procédé selon l'une ou l'autre des revendications 10 et 11, comprenant en outre l'étape :
de reconnaître le système de bus actif respectif au moyen d'un signal découplé de sélection de bus (COUPLEUR_ACTIF).

13. Procédé selon l'une des revendications 10 à 12, comprenant en outre l'étape :
de retour automatique en cas de défaillance des signaux de sélection de bus (SELECT_A, SELECT_B), dans ce cas tous les modules principaux se branchant sur le bus local principal (M) et tous les modules redondants se branchant sur le bus local redondant (R).
